# FASCICULE DE BREVET EUROPEEN

(11) **EP 0 358 542 B1**
(45) Date de publication et mention de la délivrance du brevet: **05.01.1994**
(21) Numéro de dépôt: 89402214.4
(22) Date de dépôt: 04.08.1989
(51) Int. Cl.: H02G 15/117, H02G 15/10, H02G 1/14

(54) **Procédé de réalisation d'un bouchon de pressurisation et dispositif de mise en oeuvre**
Verfahren zum Herstellen eines Druckstopfens und Vorrichtung zu dessen Durchführung
Process for manufacturing a pressurizing plug and device for carrying out the same

(30) Priorité: 05.08.1988 FR 8810606
(43) Date de publication de la demande: 14.03.1990
(73) Titulaire: Morizot, Jean-Guy, F-75016 Paris (FR)
(72) Inventeur: Morizot, Jean-Guy, F-75016 Paris (FR)
(74) Mandataire: Viard, Jean

(56) Documents cités:
- EP-A- 0 198 528
- FR-A- 1 160 046
- FR-A- 1 602 657
- FR-A- 2 272 322
- FR-A- 2 301 119
- US-A- 3 274 688

## Description

La présente invention a pour objet un procédé de réalisation d'un bouchon de pressurisation ou d'étanchéité à l'air, sur un câble.

On sait que, dans le domaine des télécommunications, il est maintenant courant d'injecter dans les câbles de l'air sous pression. Une telle pressurisation permet la surveillance pneumatique et la maintenance préventive du réseau, la vérification technique de la qualité des travaux, la localisation des défauts, etc...

Dans les câbles qui sont actuellement en service, il est nécessaire de réaliser des bouchons permettant, par exemple, le blocage de l'air aux extrémités d'un câble pressurisé. Lorsque certains éléments inclus dans le câble ne sont pas pressurisables, des bouchons sont également nécessaires pour réaliser un pontage de ces composants non pressurisables. Il s'agit donc de réaliser une isolation, vis-à-vis de l'air sous pression à l'intérieur du câble.

On connaît par FR-A- 1 160 046, un procédé de protection d'épissure ou autre raccord consistant à entourer la zone de raccordement d'une enveloppe comportant un orifice obturable et à injecter sous pression une résine autopolymérisable. Mais il s'agit d'une protection de fils coupés, puis raccordés destinée à assurer l'isolation du raccordement.

EP-A- 0 198 528 a pour objet une liaison étanche à l'eau sur un câble. Un manchon est déposé autour de la liaison entre deux parties d'un câble, ce manchon comprenant un revêtement interne de mousse dont les cellules sont obturées par une résine. Dans ce document, la liaison doit être étanche uniquement vis-à-vis de l'extérieur.

FR-A-2 301 119 a pour objet d'encapsuler rigidement les extrémités d'un câble, permettant d'isoler une cavité centrale.

Aucun de ces documents ne concerne la formation d'un bouchon de pressurisation sur un câble.

D'une manière générale, le procédé de réalisation d'un bouchon consiste à ouvrir le câble, et à injecter autour des conducteurs une résine durcissable à l'aide d'une pompe. Mais, bien entendu, l'ouverture de la gaine et les différentes opérations qui sont nécessaires, en ce qui concerne le nettoyage et la protection du bouchon qui est enterré nécessitent de nombreuses opérations qui sont longues et par suite coûteuses.

La présente invention a pour premier objet de simplifier le travail de formation d'un tel bouchon, afin de gagner un temps précieux, et d'améliorer la qualité des bouchons obtenus.

Un second objet de l'invention est de permettre l'injection de la résine en "circuit fermé", c'est à dire qu'aucun contact entre l'opérateur et la résine n'est possible lors de l'injection de celle-ci. En effet, les produits employés présentent des dangers en cas de contact avec la peau.

Selon la présente invention, le procédé de formation d'un bouchon de pressurisation sur un câble incluant un ensemble de conducteurs métalliques à l'intérieur d'une gaine renfermant un gaz sous pression, comprenant les étapes suivantes :
- disposition sous le câble d'une demi-coquille munie d'un joint;
- emboîtement d'une demi-coquille supérieure;
- enroulement d'un ruban de bourrage sur les extrémités de la coquille est caractérisé en ce que :
- dans un premier temps, la gaine est retirée sur une zone de dénudage prédéterminée inférieure à la longueur des deux demi-coquilles;
- un ruban est ensuite appliqué de manière à recouvrir d'une part l'extrémité de la gaine et d'autre part les conducteurs à proximité de la gaine, aux deux extrémités de la zone de dénudage;
- les conducteurs sont aérés;
- puis, après fermeture de la coquille par des colliers de serrage, la résine est injectée à partir d'un sac comprenant la résine et son durcisseur, le mélange résine durcisseur étant chassé dans les coquilles au moyen d'une clé.

La présente invention vise également, tel que défini à la revendication 2, un dispositif de mise en oeuvre du procédé comprenant notamment une demi-coquille inférieure, une demi-coquille supérieure équipée de deux embouts et d'un bouchon, et de colliers de serrage des deux demi-coquilles, l'étanchéité entre les deux demi-coquilles étant assurée par un joint à section en "H", tout le matériel nécessaire étant regroupé dans un "KIT".

D'autres avantages de l'invention apparaîtront au cours de la description qui va suivre d'un mode particulier de réalisation, donné uniquement à titre d'exemple non limitatif, en regard des dessins qui représentent :
- la figure 1, la partie du câble sur laquelle doit être réalisé le bouchon ainsi que le gabarit de marquage;
- la figure 2, une vue du câble après coupe de la gaine;
- la figure 3, un schéma montrant comment les dimensions des demi-coquilles à utiliser sont déterminées grâce au gabarit de marquage;
- la figure 4, une vue en coupe de la coquille posée sur le câble avant injection;
- les figures 5 et 6 une vue en perspective et en coupe d'un sac d'injection,
- la figure 7, une vue en coupe partielle d'un bouchon après formation,
- la figure 8, un schéma de remplissage de la coquille.

Comme connu en soi, le matériel nécessaire à la réalisation d'un bouchon de pressurisation est contenu de préférence dans une boîte ou trousse. Le câble étant rendu accessible, la première opération consiste à effectuer le marquage des différentes zones de celui-ci.

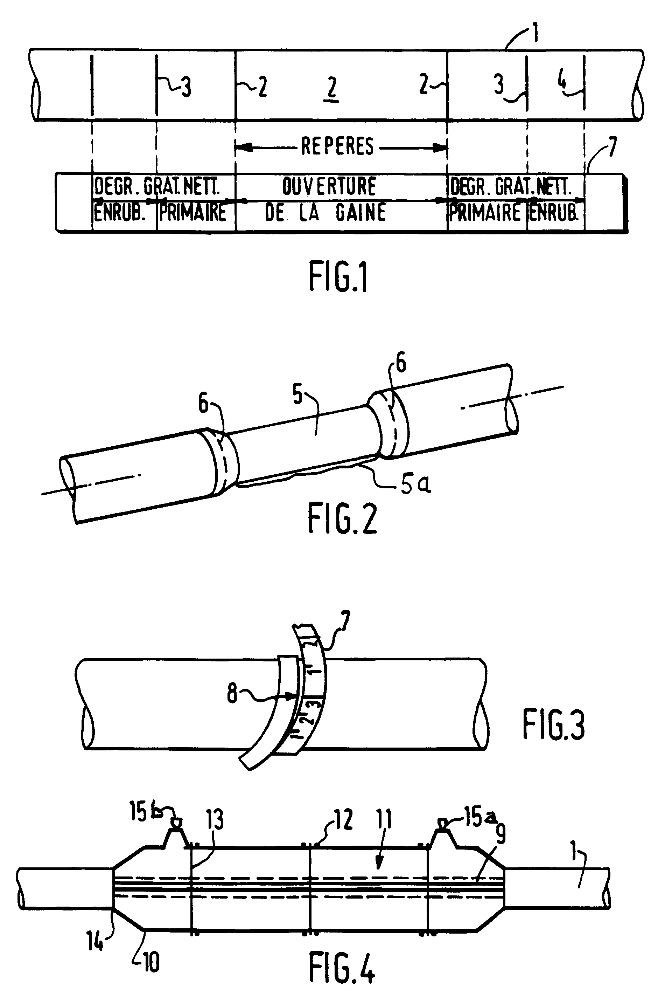

Sur la figure 1, on trace sur le câble 1, une zone 2 d'ouverture de la gaine, une zone 3 de part et d'autre de la zone 2, et une zone 4 de dégraissage, grattage, nettoyage de part et d'autre des zones 3. L'ensemble est ainsi rendu parfaitement propre. On ôte alors la gaine entre les repères 2 de la zone 2, en prenant soin de s'arrêter au niveau des couches de protection en matière plastique, désignées sous le nom de "terfane", des conducteurs et de ne pas blesser l'isolant de ceux-ci. Le fil de continuité doit, bien entendu, être préservé de la coupure. On dispose alors, de part et d'autre de l'ouverture 5, un ruban adhésif 6 d'isolation à cheval sur la gaine et sur le câble. Ce ruban évitera la pénétration de la résine dans le vide entourant les conducteurs à l'intérieur du câble. Cette opération a également pour but de préserver les couches terfanes au ras de l'ouverture, et d'éviter que les conducteurs ne soient blessés. On retire alors, dans l'espace 5, les couches terfanes de protection, ainsi que le maximum de filins de repérage accessibles afin de bien aérer l'âme du câble sans toutefois toucher au fil de continuité 5a. De préférence, on insère également au milieu des conducteurs 1a, des séparateurs (non représentés) en suivant un tracé hélicoïdal pour permettre la pénétration de la résine autour des conducteurs.

On enduit alors d'une couche d'accrochage ou primaire la zone définie par les repères 3, et comme représenté sur la figure 3, on enroule le ruban de gabarit 7 autour du câble, et à l'envers de la position représentée sur la figure 1. En effet, selon une caractéristique de l'invention, le ruban de gabarit 7 porte au verso 8, une graduation qui indique directement la référence de la coupe à effectuer pour que les coquilles s'adaptent parfaitement au câble. Les coquilles 10 et 11 présentent à leurs extrémités des échelons de diamètres différents en escalier, et c'est la position de la flèche 8 du ruban qui indique quel échelon il convient de découper pour que les coquilles s'adaptent sur le câble dans la zone 4 d'enrubannage. Des joints en "H", 9, sont alors positionnés sur la demi-coquille 10 inférieure et celle-ci est assujettie au-dessous du câble 1, comme représenté sur la figure 4.

Puis, on emboîte la coquille supérieure 11 dans le joint 9, et on met en place entre les bossages 12, des colliers 13, par exemple, en "Rilsan" (marque déposée). Etant donné la bonne adaptation du diamètre des extrémités des demi-coquilles sur le câble 1, l'étanchéité est pratiquement assurée. Toutefois, on enroule un ruban de bourrage ou un mastic 14, permettant d'obstruer totalement le jour pouvant exister entre le câble et la coquille. On procède alors à l'enrubannage de l'ensemble ainsi obtenu, et l'injection peut être effectuée.

Comme indiqué ci-dessus, la demi-coquille supérieure 11 présente deux embouts 15, et un bouchon, le bouchon étant disposé après injection, sur la valve opposée à celle par laquelle l'injection est effectuée. Cette injection se fait de préférence à l'aide d'un sac en matière plastique souple à deux compartiments, dans lequel le mélange résine-durcisseur peut être effectué sans contact avec les mains. La valve 23 du bissac est enfilée sur un tuyau raccordé au corps de l'embout 15a, le bouchon étant retiré de l'embout 15b. L'injection est alors effectuée au moyen de la clé pince-sac 24 (figure 8) et la résine se durcit peu à peu.

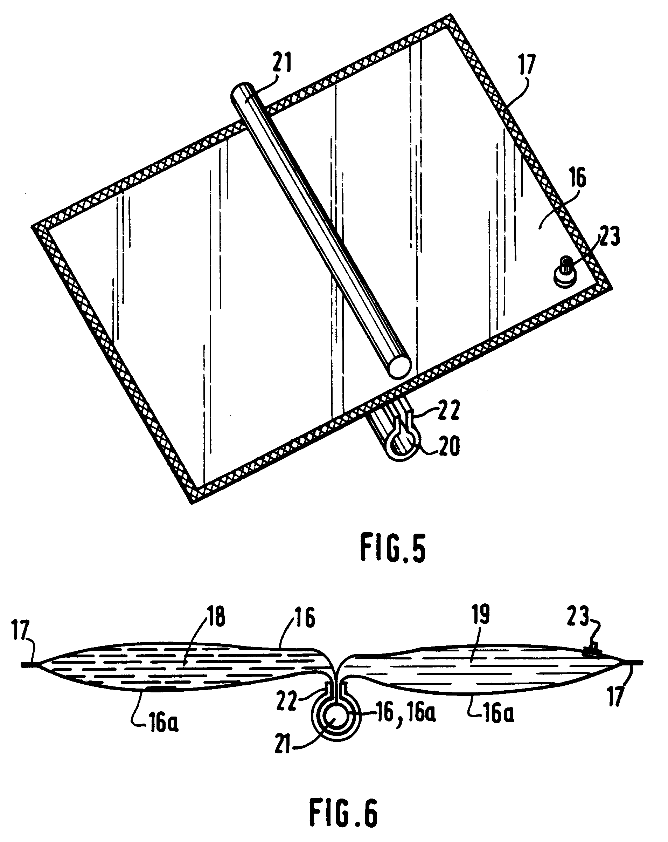

Les figures 5 et 6 représentent un sac d'injection de la résine durcissable à deux composants. Le sac constitue une poche comprenant deux parois, respectivement 16 et 16a, soudées sur leurs bords 17. Conformément à une caractéristique de l'invention, la poche est pincée, par exemple dans le milieu de sa longueur, ou en tout autre endroit approprié, de manière à constituer deux compartiments étanches 18 et 19 qui vont contenir, respectivement, la résine et le durcisseur. La pince peut être constituée par un étrier 20 relativement rigide, destiné à recevoir une tige de verrouillage 21. L'étrier 20 se prolonge à sa partie supérieure par deux rebords 22. La poche est munie d'une valve 23. La tige 21 est introduite, lors de la fermeture, dans l'étrier 20, par-dessus les côtés 16 et 16a de la poche. Ainsi, une pression assurant l'étanchéité est exercée par une déformation élastique des branches 22 qui s'exerce de manière à appliquer les côtés 16 et 16a l'un contre l'autre, ces côtés formant joint, de sorte que les deux compartiments 18 et 19 sont étanches l'un par rapport à l'autre.

Le remplissage du sac peut s'effectuer par la valve 23, en commençant par le compartiment 18, en pinçant la poche et en introduisant le second composant dans le compartiment 19. Alternativement, le remplissage peut être effectué après pose de la pince 20, 21, chaque compartiment étant rempli de son côté. Pour utiliser le sac, il suffit de tirer la tige 21 hors de l'étrier 20 et de dégager les parois 16, 16a pour que les deux composants puissent se mélanger et être injectés par la valve 23. Le mélange est chassé à l'aide d'une clé 24 (figure 8) entre les deux branches de laquelle on introduit un bord du sac que l'on enroule sur ladite clé. Le sac de résine est avantageusement contenu dans une boîte étanche, sous atmosphère d'azote, pour une meilleure conservation. Comme celà apparaît mieux sur la figre 7, il s'agit d'obturer à l'aide de la résine 25 la cavité 26 existant entre la gaine 1 et les conducteurs 1a disposés à l'intérieur de ladite gaine. Le ruban 6 évite que lors de l'injection la résine 25 ne se répande dans la cavité 26, même si elle-même n'est pas étanche à l'air. Par ailleurs, la viscosité de la résine est telle qu'elle ne pénétre pratiquement pas dans l'âme du câble formé par les conducteurs lorsqu'ils sont serrés à l'intérieur de la gaine.

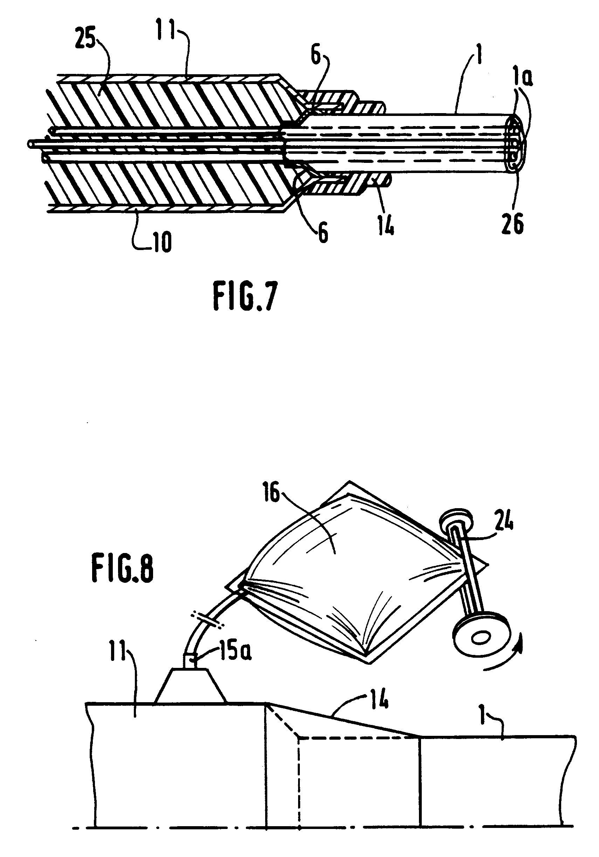

Bien que, sur la figure 7, les conducteurs aient été représentés rectilignes pour faciliter la compréhension, ils sont dans la pratique toronnés.

Le bouchon d'étanchéité ainsi installé sur un câble, peut être mis sous pression environ 72 heures après l'injection.

Les moyens décrits ci-dessus peuvent être mis en oeuvre, tant en ce qui concerne la réalisation de bouchons sur des câbles à gaine en polyéthylène, que sur des câbles à enveloppe de plomb. L'utilisation de deux demi-coquilles permet une adaptation parfaite au câble, et constitue un moule évitant des enrubannages supplémentaires. Enfin, l'injection de la résine, après son mélange avec le durcisseur, se fait sans aucun contact avec l'installateur, de sorte qu'il n'y a aucun risque pour la santé de celui-ci.

## Revendications

1. Procédé de formation d'un bouchon de pressurisation sur un câble (1) incluant un ensemble de conducteurs métalliques (1a) à l'intérieur d'une gaine renfermant un gaz sous pression, comprenant les étapes suivantes :
- disposition sous le câble (1) d'une demi-coquille (10) munie d'un joint (9);
- emboîtement d'une demi-coquille supérieure (11);
- enroulement d'un ruban de bourrage (14) sur les extrémités de la coquille (10, 11) caractérise en ce que :
- dans un premier temps, la gaine est retirée sur une zone de dénudage prédéterminée inférieure à la longueur des deux demi-coquilles (10, 11);
- un ruban (6) est ensuite appliqué de manière à recouvrir d'une part l'extrémité de la gaine et d'autre part les conducteurs (1a) à proximité de la gaine, aux deux extrémités de la zone de dénudage (2);
- les conducteurs (1a) sont aérés;
- puis, après fermeture de la coquille (10, 11) par des colliers de serrage (13), la résine est injectée à partir d'un sac (16) comprenant la résine et son durcisseur, le mélange résine durcisseur étant chassé dans les coquilles au moyen d'une clé (24).

2. Dispositif pour la mise en oeuvre du procédé selon la revendication 1, la résine étant incluse avec son durcisseur, dans un sac dans lequel deux compartiments (18, 19) sont délimités par une pince (20, 21) caractérisé en ce que la clé (24) présente une fente d'insertion d'un bord du sac, le mélange étant chassé par enroulement de la clé sur le sac.

## Claims

1. A method of forming a pressurization plug on a cable (1) that includes a set of metal conductors (1a) inside a sheath that contains a gas under pressure, the method comprises the following steps:
a half-shell (10) provided with a gasket (9) is put into place beneath the cable (1);
a top half-shell (11) is engaged therewith;
a padding tape (14) is wound over the ends of the shell (10, 11);
the method being characterized in that:
initially, the sheath is removed from a predetermined stripping zone that is shorter than the length of the two half-shells (10, 11);
a tape (6) is then applied so as to cover both the end of the sheath and the conductors (1a) close to the sheath, at both ends of the stripping zone (2);
the conductors (1a) are splayed apart; and
after the shell (10, 11) has been closed by means of clamping collars (13), resin is injected from a bag (16) containing a resin and a hardener therefore, the resin and hardener mixture being expelled into the shells by means of a key (24).

2. A device for implementing the method according to claim 1, the resin being included with its hardener in a bag having two compartments (18, 19) formed therein by means of a clamp (20, 21), the device being characterized in that the key (24) has a slot in which an edge of the bag is inserted, with the mixture being expelled by winding the bag onto the key.

## Patentansprüche

1. Verfahren zum Herstellen eines Druckstopfens auf einem Kabel (1) mit einer Anordnung von metallischen Leitern (1a) im Innern eines Mantels, der ein unter Druck stehendes Gas umfaßt, mit folgenden Schritten:
- Anordnen einer mit einem Verbindungsstück (9) versehenen Halbschale (10) unter dem Kabel (1);
- Anfügen einer oberen Halbschale (11);
- Wickeln eines Bandes (14) aus Stopfmaterial um die Enden der Schale (10, 11);
dadurch gekennzeichnet, daß
- zuerst der Mantel auf einem blanken vorbestimmten Abschnitt, der kleiner als die Länge der zwei Halbschalen (10, 11) ist, entfernt wird,
- danach ein Band (6) so angelegt wird, daß einerseits das Ende des Mantels und andererseits die Leiter (1a) in der Nähe des Mantels an beiden Enden des blanken Abschnitts (2) bedeckt werden und
- dann das über einen Beutel (16) entweichende Harz nach Verschließen der Schale (10, 11) durch Klemmringe (13) eingefüllt wird, wobei der Beutel das Harz und seinen Härter umfaßt und die Mischung aus Harz und Härter mittels eines Schlüssels (24) in die Schalen (10, 11) gepreßt wird.

2. Vorrichtung zum Durchführen des Verfahrens nach Anspruch 1, wobei zwei Teile (18, 19) eines Beutels, in welchem das Harz und sein Härter beinhaltet ist, durch eine Klemme (20, 21) getrennt sind, dadurch gekennzeichnet, daß der Schlüssel (24) einen Schlitz zum Einführen eines Randes des Beutels aufweist, wobei die Mischung durch Aufrollen des Beutels durch den Schlüssel ausgepreßt wird.
